# EUROPEAN PATENT SPECIFICATION

(11) **EP 4 152 429 B1**
(45) Date of publication and mention of the grant of the patent: **13.05.2026**
(21) Application number: 22192388.1
(22) Date of filing: 26.08.2022
(51) Int. Cl.: H01M 4/02, H01M 4/04, H01M 10/052

(54) **ANODE FOR LITHIUM SECONDARY BATTERY, LITHIUM SECONDARY BATTERY INCLUDING THE SAME AND METHOD OF FABRICATING THE SAME**
ANODE FÜR LITHIUM-SEKUNDÄRBATTERIE, LITHIUMSEKUNDÄRBATTERIE DAMIT UND HERSTELLUNGSVERFAHREN
ANODE POUR BATTERIE SECONDAIRE AU LITHIUM, BATTERIE SECONDAIRE AU LITHIUM LA COMPRENANT ET SON PROCÉDÉ DE FABRICATION

(30) Priority: 01.09.2021 KR 20210116212
(43) Date of publication of application: 22.03.2023
(73) Proprietor: SK On Co., Ltd., Seoul 03161 (KR)
(72) Inventor: JO, Byung Wook, 34124 Daejeon (KR); PARK, Sung Jun, 34124 Daejeon (KR); KANG, Byung Chan, 34124 Daejeon (KR); KIM, In Ha, 34124 Daejeon (KR)
(74) Representative: Stolmár & Partner Patentanwälte PartG mbB

(56) References cited:
- EP-A1- 3 817 098
- WO-A1-2020/137321
- US-A1- 2021 143 414

## Description

### CROSS-REFERENCE TO RELATED APPLICATION AND CLAIM OF PRIORITY

This application claims priority to Korean Patent Application No. 10-2021-0116212 filed on September 1, 2021 in the Korean Intellectual Property Office (KIPO).

### BACKGROUND

### 1. Field

The present invention relates to an anode for a lithium secondary battery, a lithium secondary battery including the same, and a method of fabricating the same. More particularly, the present invention relates to an anode including an anode current collector and an anode active material layer, a lithium secondary battery including the same and a method of fabricating the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle.

The lithium secondary battery is highlighted due to high operational voltage and energy density per unit weight, a high charging rate, a compact dimension, etc.

In a high C-rate rapid charging of the lithium secondary battery, lithium salts may be deposited on a surface of the anode due to an anode resistance to decrease a capacity as charge/discharge cycles are repeated. Accordingly, diffusivity of lithium ions may be preferably increased so as to reduce the anode resistance.

To increase the lithium-ion diffusivity in an electrode, a lithium-ion channel in the electrode may be formed. For example, micro-holes or line-shaped channels may be formed in the electrode using a laser etching, an imprinting, etc., so that lithium ions may penetrate or diffuse into the electrode through the channels.

However, in the above-described method, ion channels having a fine pattern in the electrode may not be uniformly formed at a high speed, and a production efficiency may also be deteriorated.

Additionally, when the fine pattern is formed, burr may be caused on the electrode surface, and an electrode thickness may be increased. Further, pore properties and battery cell performance in the electrode may be deteriorated by the micro-pattern formation.

EP 3 817 098 A1 and US 2021/143414 A1 disclose anodes for lithium secondary batteries.

### SUMMARY

According to an aspect of the present invention, there is provided an anode for a lithium secondary battery having improved electrical, physical and chemical properties.

According to an aspect of the present invention, there is provided a method of fabricating an anode for a lithium secondary battery having improved stability and reliability.

According to an aspect of the present invention, there is provided a lithium secondary battery including the anode for a lithium secondary battery.

An anode for a lithium secondary battery according to the present invention is defined in claim 1. It includes an anode current collector, and an anode active material layer formed on the anode current collector. The anode active material layer includes a first portion and a second portion which have different porosities from each other and are repeatedly and alternately arranged.

In some embodiments, the first portion and the second portion may each have a uniform porosity along the protruding directior of the anode tab.

In some embodiments, the first portion and the second portion may have the same thickness.

In some embodiments, Y/X of the anode active material layer may be in a range from 0.57 to 0.87. X is a maximum porosity obtained by an X-ray microscopy (XRM) measurement of the anode active material layer and Y is a minimum porosity obtained by the XRM measurement of the anode active material layer.

In some embodiments, the first portion may have a higher porosity than that of the second portion, and a distance between a point of a maximum porosity in the first portion and a point of a minimum porosity in the second portion is in a range from 0.3 mm to 2 mm.

A lithium secondary battery includes a cathode and the anode for a lithium secondary battery according to embodiments as described above facing the cathode.

In a method of fabricating an anode for a lithium secondary battery according to embodiments of the present invention, a slurry coating apparatus including a plurality of slits arranged in a grid shape is prepared. An anode slurry is discharged on a current collector using the slurry coating apparatus to form a preliminary anode active material layer. The preliminary anode active material layer is pressed to form an anode active material layer having a uniform thickness.

In some embodiments, the slurry coating apparatus may include discharging portions defined as the slits, and a closed portion defined between the discharging portions.

In some embodiments, each width of the discharging portions and the closed portion may be in a range from 300 µm to 2,000 µm.

In some embodiments, the slit may have a polygonal, circular or elliptical shape.

In some embodiments, B/A may be in a range from 0.64 to 0.93. A is a maximum thickness of the preliminary anode active material layer, and B is a minimum thickness of the preliminary anode active material layer.

In some embodiments, the preliminary anode active material layer may have a wavy upper profile.

In some embodiments, a minimum thickness of the preliminary anode active material layer may be greater than the thickness of the anode active material layer.

In some embodiments, the preliminary anode active material layer may have a uniform porosity, and the preliminary anode active material layer may be pressed to form a first portion and a second portion having different porosities from each other.

In some embodiments, the anode slurry may include an anode active material containing a silicon-based material.

An anode for a lithium secondary battery according to the embodiments of the present invention may have a high porosity, so that a channel through which lithium ions may easily penetrate may be formed. Accordingly, a resistance of the anode may be reduced at a high C-rate and rapid charging properties may be improved.

A lithium-ion channel of the anode for a lithium secondary battery according to embodiments of the present invention may not be a complete pore of 100% porosity, and a channel having a relatively high porosity may be provided. Accordingly, a high-density anode may be provided.

According to embodiments of the present invention, a pattern serving as the lithium-ion channel may be formed while coating an anode slurry on a current collector. Accordingly, generation of burrs and impurities that may be caused in a formation of a fine pattern and a production cost may also be decreased.

### BRIEF DESCRIPTION OF THE DRAWINGS

FIG. 1 is a top plan view illustrating an anode for a lithium secondary battery according to exemplary embodiments.
FIGS. 2 and 3 are a schematic cross-sectional view and a plan view respectively, of a lithium secondary battery according to exemplary embodiments.
FIG. 4 is a schematic view illustrating a slurry coating apparatus including a plurality of slits according to exemplary embodiments.
FIG. 5 is a schematic cross-sectional view illustrating a preliminary anode active material layer and an anode active material layer according to exemplary embodiments.
FIG. 6 is a graph showing electrode thicknesses before and after pressing according to Example 1 and Comparative Example 1 measured by a laser sensor.
FIG. 7 is an image obtained by measuring electrodes before and after pressing according to Example 1 and Comparative Example 1 by a 3D confocal microscope.
FIG. 8 is a graph showing rapid charging properties of batteries according to Example 1 and Comparative Example 1.

### DETAILED DESCRIPTION OF THE EMBODIMENTS

According to exemplary embodiments of the present invention, an anode for a lithium secondary battery which includes regions of different porosities is provided.

According to exemplary embodiments of the present invention, a method of fabricating the anode and a lithium secondary battery including the anode are also provided.

Hereinafter, the present invention will be described in detail with reference to exemplary embodiments and the accompanying drawings. However, those skilled in the art will appreciate that such embodiments described with reference to the accompanying drawings are provided to further understand the spirit of the present invention and do not limit subject matters to be protected as disclosed in the detailed description and appended claims.

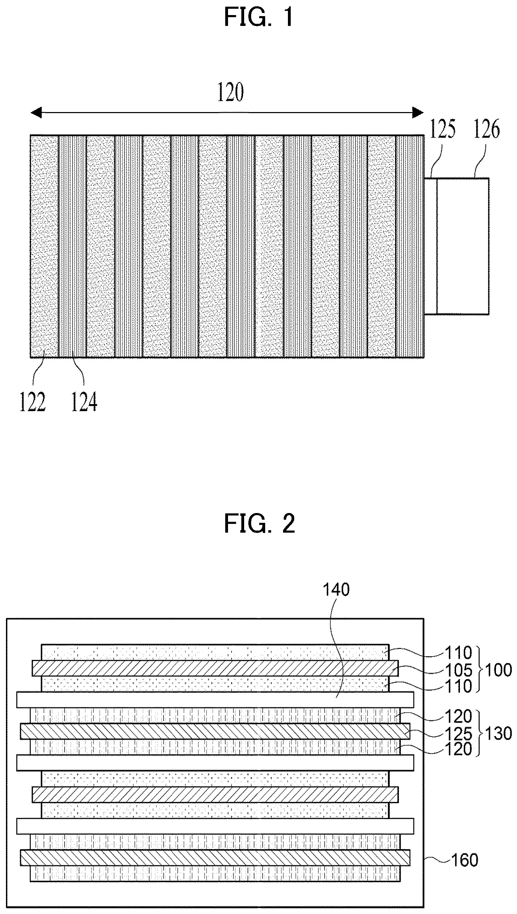

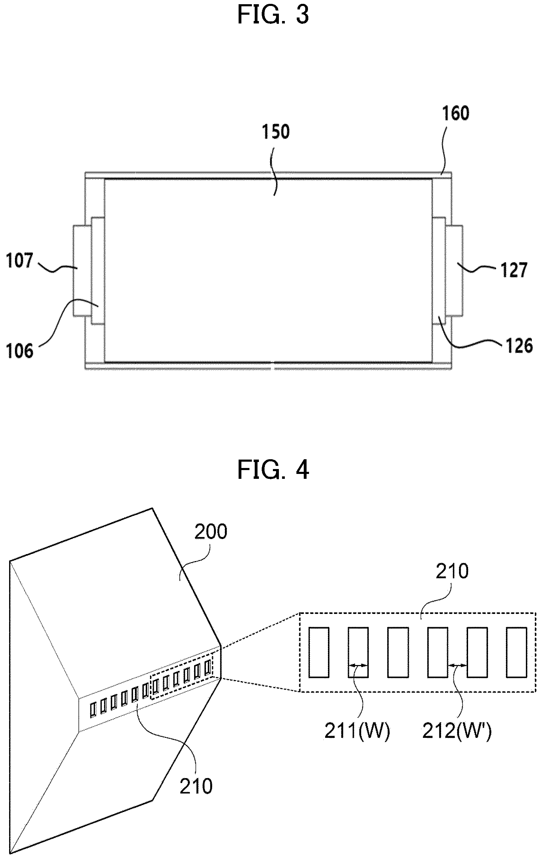

FIG. 1 is a top plan view illustrating an anode for a lithium secondary battery according to exemplary embodiments. FIGS. 2 and 3 are a schematic cross-sectional view and a plan view respectively, of a lithium secondary battery according to exemplary embodiments.

Referring to FIG. 1, an anode active material layer 120 may include a first portion 122 and a second portion 124 having different porosities from each other, which are alternately and repeatedly arranged. In some embodiments, a thickness of the anode active material layer 120 may be substantially the same. The first portion 122 and the second portion 124 may be repeatedly arranged.

In the present specification, the same thickness may include a thickness error range of ±2 µm, and may be interpreted as substantially the same within the range.

Referring to FIG. 2, a lithium secondary battery may include an electrode assembly including a cathode 100, an anode 130 and a separation layer 140 interposed between the cathode and the anode.

The anode 130 may include an anode electrode current collector 125 and the anode active material layer 120 formed by coating an anode active material on the anode current collector 125.

For example, an anode slurry may be prepared by mixing and stirring an anode active material with a binder, a conductive material and/or a dispersing material in a solvent. The anode slurry may be coated on at least one surface of an anode current collector 125 using a slurry coating apparatus 200 (see FIG. 4), then dried and pressed to form the anode active material layer 120. In some embodiments, a preliminary anode active material layer 220 having a wavy upper profile may be formed as described below by the coating of the anode slurry.

The anode active material may include a material capable of intercalating and de-intercalating lithium ions. For example, carbon-based materials such as crystalline carbon, amorphous carbon, carbon composite material and carbon fiber; lithium alloy; a silicon (Si)-based compound or tin may be used.

Examples of the amorphous carbon include hard carbon, coke, mesocarbon microbead (MCMB), mesophase pitch-based carbon fiber (MPCF), etc.

The silicon-based compound may include, e.g., silicon oxide, SiOx (0<x<2), or a silicon-carbon composite compound such as silicon carbide (SiC).

The binder may include a water-insoluble binder, a water-soluble binder or a combination thereof.

In some embodiments, an amount of the binder may be 3 weight percent (wt%) or less based on a total weight of the anode active material layer 120.

Examples of the water-insoluble binder may include polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, polyamideimide, polyimide or a combination thereof.

Examples of the water-soluble binder may include styrene-butadiene rubber, acrylated styrene-butadiene rubber, polyvinyl alcohol, sodium polyacrylate, a copolymer of propylene and an olefin having 2 to 8 carbon atoms, a copolymer of (meth)acrylic acid and (meth)acrylic acid alkyl ester or a combination thereof.

If the water-soluble binder is used, a cellulose-based compound capable of enhancing viscosity may be further included. The cellulose-based compound may include carboxymethyl cellulose, hydroxypropylmethyl cellulose, methyl cellulose or an alkali metal salt thereof. These may be used alone or in a combination thereof. The alkali metal may be Na, K or Li.

The conductive material may be added to the electrode to improve conductivity. Examples of the conductive material may include carbon-based materials such as natural graphite, artificial graphite, carbon black, acetylene black, ketjen black, carbon fiber, carbon nanotube, etc.; a metallic material such as a metal powder or a metal fiber of copper, nickel, aluminum, silver, etc.; a conductive polymer such as a polyphenylene derivative; or a combination thereof.

The anode current collector 125 may include a copper foil, a nickel foil, a stainless-steel foil, a titanium foil, a nickel foam, a copper foam, a polymer substrate coated with a conductive metal, etc. Preferably, the copper foil may be used.

FIG. 4 is a schematic view illustrating a slurry coating apparatus including a plurality of slits according to exemplary embodiments.

Referring to FIG. 4, the slurry coating apparatus 200 may include a slit portion 210 including a plurality of slits arranged in a grid shape at an end portion thereof. The slits of the slit portion 210 may be defined as a discharging portion 211. A closed portion 212 corresponding to a non-discharging portion may be formed between the discharging portions 211.

In exemplary embodiments, the anode slurry may be discharged and coated on the anode current collector 125 using the slurry coating apparatus 200. The anode slurry may be coated on a region of the current collector corresponding to the discharging portion 211. The anode slurry may not be directly discharged on a region corresponding to the closed portion 212 of the anode current collector 125, but the anode slurry in the coated region may flow and diffuse to the region corresponding to the closed portion 212 of the anode current collector 125.

Thus, while the anode slurry may be coated entirely on the anode current collector 125, a local variation of a loading amount may occur based on a structure of the discharging portion 211. For example, a grid pattern formed in the slit portion 210 may be implemented on the anode current collector 125.

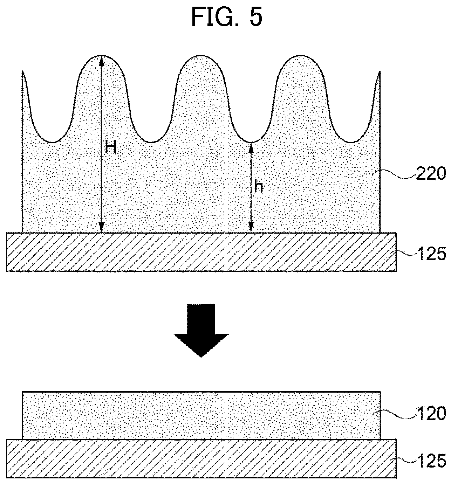

FIG. 5 is a schematic cross-sectional view illustrating a preliminary anode active material layer and an anode active material layer according to exemplary embodiments.

Referring to FIG. 5, a height of the coated region through the discharging portion 211 on the anode current collector 125 is indicated as H, and a coating height in the region corresponding to the closed portion 212 is indicated as h. The heights H and h may be measured based on one surface of the anode current collector 125.

The height H may be proportional to an amount of the anode slurry discharged through the discharging portion 211, and the height h may be proportional to a flowed and diffused amount of the anode slurry. Accordingly, a coating height difference may be generated on the anode current collector 125 due to a variation in the slurry loading amount. Thus, the preliminary anode active material layer 220 having, e.g., a wavy upper profile may be formed.

The preliminary anode active material layer 220 having the wavy upper profile may be converted into an active material layer having a uniform thickness after being pressed.

In some embodiments, a width W of the discharging portion 211 may be in a range from 300 µm to 2,000 µm. In an embodiment, a width W' of the closed portion 212 may also be in a range from 300 µm to 2,000 µm.

If the width is less than 300µm, the preliminary anode active material layer 220 may not be easily formed, and clogging of the discharging portion 211 may be caused by a particle agglomeration. If the width exceeds 2,000 µm, the number of patterns per unit area of the electrode may be decreased, and sufficient lithium ion channel formation may not be implemented. Preferably, the width of the discharging part 211 and/or the closed portion 212 may be in a range from 1,000 µm to 1,500 µm.

The slit or the discharging portion 210 may have a polygonal, circular or elliptical shape. Preferably, the slit or the discharging portion 210 may have a rectangular shape in consideration of a desired pattern formation.

In an embodiment, when a maximum thickness of the preliminary anode active material layer 220 is designated as A and a minimum thickness is designated as B, B/A may be in a range from 0.64 to 0.93. A thickness of the preliminary anode active material layer 220 may be appropriately adjusted using an interval between the anode current collector 125 and the slurry coating apparatus 200, an interval of the grid patterns of the slit portion 210, a viscosity of the slurry, etc.

If B/A exceeds 0.93, the effect from the pattern formation may not be sufficiently provided. If B/A is less than 0.64, a porosity of the region having the maximum thickness may be decreased during the pressing process, and thus capacity and life-span properties may be deteriorated.

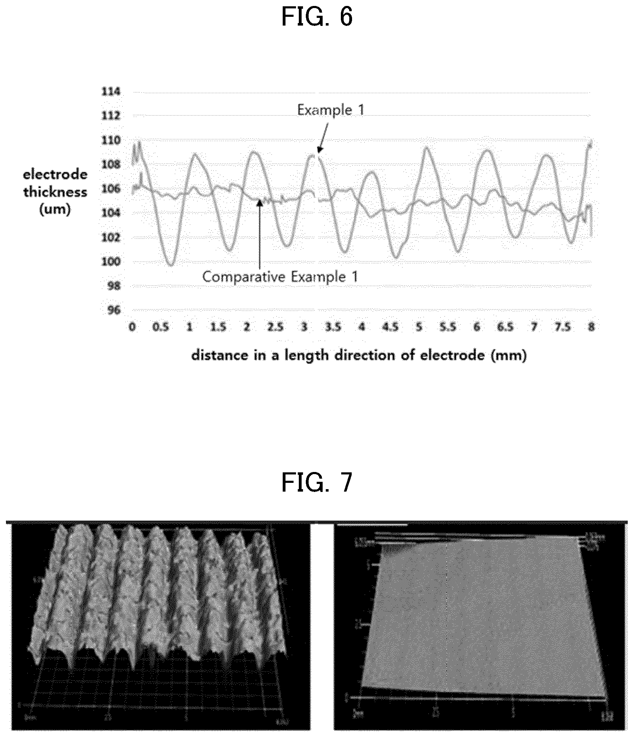

In an embodiment, when a distance between a maximum thickness and a minimum thickness is designated as L, L may be in a range from 0.3 mm to 2.0 mm. As shown in FIG. 6, in the electrode including the preliminary anode active material layer 220, a thickness may be regularly repeated in an electrode length direction.

If the distance is greater than 2.0 mm, the number of patterns in the entire electrode may be decreased, and the effect from the pattern formation may not be sufficiently provided. If the L is less than 0.3 mm, a gap between the discharging portions 211 of the slit portion 210 may become small, the slurry may not be uniformly discharged, and clogging of the discharging portion 211 may occur by the particle agglomeration.

The minimum thickness of the preliminary anode active material layer 220 may be greater than the thickness of the anode active material layer 120. As described above, the anode active material layer 120 having a uniform thickness may be formed by pressing the preliminary anode active material layer 220.

For example, the wavy upper profile of the preliminary anode active material layer 220 before the pressing may be removed after the pressing to form the anode active material layer 120 having the uniform thickness.

The preliminary anode active material layer 220 may have a uniform porosity, but may have a local deviation of a loading amount of the active material. Thus, even though the anode active material layer 120 is formed to have a uniform thickness after the pressing, a difference of a pressing ratio (a thickness after rolling-a thickness before rolling), and a local difference of porosity may be induced in the anode active material layer 120.

Accordingly, the anode active material layer 120 formed on the anode current collector 125 may include the first portion 122 and the second portion 124 having the same thickness and different porosities from each other. As shown in FIG. 7, in Example 1 to be described later, the anode active material layer including regions having different porosities was formed.

Referring again to FIG. 1, the anode current collector 125 may include an anode tab 126 as an electrode tab protruding from one side of the anode current collector 125. As described above, the anode active material layer 120 in which the first portion 122 and the second portion 124 having different porosities from each other are repeatedly arranged may be formed on the anode current collector 125.

A direction parallel to the protruding direction of the anode tab 126 is defined as a length direction of an electrode. Further, a direction perpendicular to the protruding direction of the anode tab 126 is defined as a width direction of an electrode.

The first portion 122 and the second portion 124 may be alternately and repeatedly arranged in a protruding direction of the anode tab 126 or a perpendicular direction to the protruding direction. For example, the first portion 122 and the second portion 124 may be alternately and repeatedly arranged along the length direction or the width direction of the electrode. The thicknesses of the first portion 122 and the second portion 124 may be substantially the same.

In exemplary embodiments, the first portion 122 may have a porosity greater than that of the second portion 124, and lithium ions may easily penetrate into the electrode through the first portion 122, which is a portion having a high porosity. The penetrating lithium ions may be easily diffused to a peripheral portion of the electrode, thereby reducing an anode resistance at a high C-rate.

Preferably, the first portion 122 and the second portion 124 may extend in a direction perpendicular to the protruding direction of the anode tab 126, and may be alternately and repeatedly arranged along the protruding direction. For example, the first part 122 and the second part 124 may be alternately and repeatedly arranged along the length direction of the electrode.

In this case, each of the first portion 122 and the second portion 124 may have a uniform porosity along the length direction of the electrode. The term "uniform porosity" may include an error range of, e.g., ±1%, and the porosity within the range may be interpreted as substantially the same porosity.

The first portion 122 and the second portion 124 may be alternately and repeatedly arranged along the length direction of the electrode, and thus the porosities may be alternately repeated. In exemplary embodiments, the region having higher porosity may serve as a lithium-ion channel.

The lithium-ion channel may not a perfect pore having a porosity of 100%, but may refer to a region capable of serving as a passage having a relatively high porosity. The porosity may be relatively reduced in the second portion 124, so that an electrode cell performance may be improved while maintaining high energy density. Thus, rapid charging performance of the battery may be implemented.

In some embodiments, the porosity of the anode active material layer 120 may form a pattern period. When a maximum value of the porosity obtained by an X-ray microscope (XRM) measurement is designated as X (%) and a minimum value is designated as Y (%), Y/X may be in a range from 0.57 to 0.87. If Y/X is less than 0.57, diffusion of lithium ions may be inhibited due to an excessive reduction of the porosity in a specific region. If Y/X exceeds 0.87, a sufficient lithium-ion channel may not be provided due to a small local difference of porosity.

The XRM measurement conditions widely used in the related art may be used in the measurement above.

In some embodiments, the first portion 122 may have a porosity greater than that of the second portion 124, and the first portion 122 may correspond to the thickness h of FIG. 5. The second portion 124 may correspond to the thickness H in FIG. 5.

The distance between a point of a maximum porosity in the first portion 122 and a point of a minimum porosity in the second portion 124 may be in a range from 0.3 mm to 2 mm. If the distance exceeds 2 mm, sufficient lithium-ion channels may not be formed as the number of patterns formed in the electrode decreases. If the distance is less than 0.3 mm, the distance between the discharging portions 211 may be decreased, resulting in non-uniform discharging of the slurry, and clogging of the discharging portion 211 due to the particle agglomeration.

Referring again to FIGS. 2 and 3 again, the lithium secondary battery may include an electrode assembly 150 including the cathode 100, an anode 130, and the separation layer 140 interposed between the cathode and the anode. The electrode assembly 150 may be accommodated and impregnated with an electrolyte in a case 160.

The cathode 100 may include a cathode active material layer 110 formed by coating a cathode active material on the cathode current collector 105. The cathode active material may include a compound capable of reversibly intercalating and de-intercalating lithium ions.

In exemplary embodiments, the cathode active material may include a lithium-transition metal composite oxide particle. For example, the lithium-transition metal composite oxide particle may include nickel (Ni), and may further include at least one of cobalt (Co) and manganese (Mn).

For example, the lithium-transition metal composite oxide particle may be represented by Chemical Formula 1 below.

[Chemical Formula 1] LiₓNi_{1-y}M_{y}O_{2+z}

In Chemical Formula 1, 0.9≤x≤1.1, 0≤y≤0.7, and -0.1≤z≤0.1. M may include at least one element selected from the group consisting of Na, Mg, Ca, Y, Ti, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be 0.8 or more, and may preferably exceed 0.8.

Ni may serve as a transition metal related to power and capacity of the lithium secondary battery. Therefore, as described above, the high-Ni composition in the lithium-transition metal composite oxide particle may be employed, so that a high-capacity cathode and a high-capacity lithium secondary battery may be implemented.

However, as the content of Ni increases, long-term storage stability and life-span stability of the cathode or the secondary battery may be relatively deteriorated. In exemplary embodiments, life-span stability and capacity retention may be improved by the introduction of Mn while maintaining an electrical conductivity by including Co.

In some embodiments, the cathode active material or the lithium-transition metal composite oxide particle may further include a coating element or a doping element. For example, the coating element or doping element may include Al, Ti, Ba, Zr, Si, B, Mg, P, W, V, an alloy thereof, or an oxide thereof. These may be used alone or in combination thereof. The cathode active material particle may be passivated by the coating or doping element, thereby further improving stability and life-span even when a penetration of an external object occurs.

A slurry may be prepared by mixing and stirring the cathode active material with a binder, a conductive material and/or a dispersive agent in a solvent. The slurry may be coated on the cathode current collector 105, dried and pressed to form the cathode 100.

The cathode current collector 105 may include, e.g., stainless steel, nickel, aluminum, titanium, copper or an alloy thereof, preferably may include aluminum or an aluminum alloy.

The binder and the conductive material may include materials substantially the same as or similar to those used in the anode. For example, a PVDF-based binder may be used as a cathode binder.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in the case 160 to define the lithium secondary battery. In exemplary embodiments, a non-aqueous electrolyte may be used as the electrolyte.

For example, the non-aqueous electrolyte may include a lithium salt and an organic solvent. The lithium salt may be represented by Li⁺X⁻. An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 3, an electrode tab (a cathode tab and an anode tab) may be formed from each of the cathode current collector 105 and the anode current collector 125 to extend to one end of the case 160. The electrode tabs may be welded together with the one end of the case 160 to form an electrode lead (a cathode lead 107 and an anode lead 127) exposed at an outside of the case 160.

FIG. 3 illustrates that the cathode lead 107 and the anode lead 127 protrude from both lateral sides of the case 160 in a planar view, but locations of the electrode leads are not limited as illustrated in FIG. 3. For example, the electrode leads may protrude from an upper side or a lower side of the case 160.

The lithium secondary battery may be fabricated into a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention.

The invention is defined by the appended claims.

### Fabrication of secondary battery

### Anode

Graphite and SiOx (0<x<2) as an anode active material, styrene-butadiene rubber (SBR) as an aqueous binder, carboxymethyl cellulose (CMC), carbon nanotube as a conductive material were mixed in a weight ratio of 93.0:3.0:1.8:1.2:1.0, and then dispersed in water to form an anode slurry.

The anode slurry was coated an 8 µm-thick copper foil using the slurry coating apparatus of the structure illustrated FIG. 4 (rectangular slit) so that an anode slurry loading value became 12.0 mg/cm² or 14.0 mg/cm². The slits were arranged so that loading values were alternately repeated along a length direction. The coated slurry was dried in an oven at 120 °C for 2 minutes, and then pressed to form an anode having an anode active material layer with a density of 1.7 g/cc.

### <Cathode>

LiNi_{0.8}Co_{0.1}Mn_{0.1}O₂ as a cathode active material, Denka Black as a conductive material and PVDF as a binder were mixed in a mass ratio of 97.3:1.2:1.5 to prepare a cathode slurry. The cathode slurry was coated on an aluminum substrate with a thickness of 12 µm, and then dried and pressed to form a cathode.

### <Secondary Battery>

The cathode and the anode prepared as described above were each notched with a predetermined size, and stacked with a separator (polyethylene, thickness: 13 µm) interposed between the cathode and the anode to form a battery cell, and each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 24 hours to obtain a lithium secondary battery.

The electrolyte was prepared by forming 1M LiPF₆ solution in a mixed solvent of ethylene carbonate (EC)/ethyl methyl carbonate (EMC)/diethylene carbonate (DEC) (25/45/30; volume ratio), and then adding 7 wt% of fluoroethylene carbonate (FEC), 0.5 wt% of 1,3-propensultone (PRS), 0.5 wt% of lithium bis(oxalato)borate (LiBOB) and 0.5 wt% of ethylene sulfate (ESA).

### Examples and Comparative Examples

Conditions of the slurry coating were changed as shown in Table 1 to obtain the secondary batteries of Examples and Comparative Examples by the method as described above.

**[Table 1]**

| | Slurry coating conditions | | | Thickness of preliminary anode active material layer | |
|---|---|---|---|---|---|
| | width of slit (µm) | width of closed portion (µm) | loading amount of active material (mg/cm²) | A-B (maximum-minimum, µm) | B/A |
| Example 1 | 300 | 300 | 12 | 7 | 0.93 |
| Example 2 | 1,000 | 1,000 | 12 | 10 | 0.89 |
| Example 3 | 1,000 | 1,500 | 12 | 24 | 0.76 |
| Example 4 | 2,000 | 2,000 | 12 | 40 | 0.64 |
| Example 5 | 1,000 | 1,000 | 14 | 14 | 0.88 |
| Comparative Example 1 | - | - | 12 | - | - |
| Comparative Example 2 | 200 | 200 | 12 | non-measurable (irregular coating) | |
| Comparative Example 3 | 1,000 | 3,000 | 12 | 54 | 0.54 |
| Comparative Example 4 | 1,000 | 300 | 12 | 4 | 0.96 |
| Comparative Example 5 | 3,000 | 2,000 | 12 | 34 | 0.68 |

### Experimental Example

### (1) Measurement of XRM porosity

A measurement area was set to completely include one pattern cycle based on an electrode length direction, solid portions and pores in the electrode were divided through an XRM imaging. An entire area was divided into sections of 100 µm in the length direction, and a porosity in each section was calculated using a pore analysis software to measure a maximum porosity and a minimum porosity in the pattern.

### (2) Measurement of charge/discharge efficiency at high rate charging

A constant current was applied at a rate of 1.5C at 25°C until a battery voltage reached 4.2V, and a charging capacity was measured. Thereafter, the battery was discharged at a rate of 0.3C until a battery voltage reached 2.5V, and a discharge capacity was measured. A charge/discharge efficiency was calculated by dividing the measured discharging capacity by the charging capacity.

### (3) Measurement of life-span property (capacity retention)

The secondary batteries of Examples and Comparative Examples were fabricated into cells having a capacity of about 70 Ah, and then a life-span evaluation was performed in a chamber maintained at a predetermined constant temperature (25°C) within a range of SOC 8 to 80 at 2C charge/0.3C discharge C-rate. Specifically, a capacity retention after 300 cycles relative to an initial capacity was measured.

The results are shown in Table 2 below.

**[Table 2]**

| | XRM porosity | | charge/discharge efficiency (%) | life-span (capacity retention, %) |
|---|---|---|---|---|
| | Y/X (minimum/ maximum) | distance between Y and X (mm) | | |
| Example 1 | 0.87 | 0.3 | 99.5 | 89 |
| Example 2 | 0.76 | 1 | 99.7 | 94 |
| Example 3 | 0.63 | 1.25 | 99.6 | 93 |
| Example 4 | 0.57 | 2 | 99.5 | 91 |
| Example 5 | 0.69 | 1 | 99.2 | 86 |
| Comparative Example 1 | - | - | 98.3 | 60 |
| Comparative Example 3 | 0.52 | 2 | 98.5 | 58 |
| Comparative Example 4 | 0.91 | 0.65 | 98.6 | 62 |
| Comparative Example 5 | 0.69 | 2.5 | 98.4 | 63 |

Referring to Table 2, in Examples 1 to 4, the ratio (B/A) of the maximum thickness and the minimum thickness of the preliminary anode active material layer was adjusted within 0.64 and 0.93 in a range from 300 µm to 2,000 µm of widths of the slit and the closed portion, and the porosity of the anode active material layer was controlled. Accordingly, the charging/discharging efficiency and life-span property in high-rate charging were improved.

In Example 5, the thickness of the preliminary anode active material layer was adjusted by controlling the loading amount of the active material. As described above, when patterns having different porosities are repeatedly arranged, a portion with a high porosity may serve as a lithium ion channel to improve rapid charge and discharge properties.

Further, even in the high-density electrode of 1.7 g/cc or more, the rapid charge/discharge properties were improved.

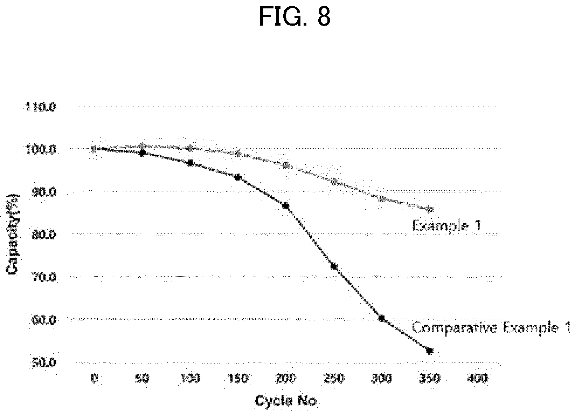

FIG. 8 is a graph showing rapid charging properties of batteries according to Example 1 and Comparative Example 1.

As shown in FIG. 8, in Comparative Example 1, the pore pattern arrangement was not formed in the anode active material layer, and the life-span property was evidently degraded compared to those from Example 1.

In Comparative Example 2, the slit width decreased during the slurry coating, resulting in a poor slurry discharge and a non-uniform coating thickness.

In Comparative Examples 3 and 5, a gap between the slits or between the closed portions in the slurry coating apparatus was not formed within the range of 300 µm to 2,000 µm, and the charging/discharging efficiency and life-span property were degraded.

In Comparative Example 4, the ratio (B/A) of the maximum and minimum thicknesses of the preliminary anode active material layer was not within 0.64 to 0.93, and the charge/discharge efficiency and life-span property were also deteriorated.

## Claims

1. An anode (130) for a lithium secondary battery, comprising:
an anode current collector (125); and
an anode active material layer (120) formed on the anode current collector (125), the anode active material layer (120) comprising a first portion (122) and a second portion (124) which have different porosities from each other and are repeatedly and alternately arranged,
wherein the porosities are obtained by X-ray microscopy (XRM),
wherein the anode current collector (125) comprises an anode tab (126) protruding from one side of the anode current collector (125), and
the first portion (122) and the second portion (124) are alternately and repeatedly arranged along a protruding direction of the anode tab (126) or a direction perpendicular to the protruding direction of the anode tab (126), defined as a width direction of an electrode.

2. The anode (130) for a lithium secondary battery of claim 1, wherein the first portion (122) and the second portion (124) extend in the direction perpendicular to the protruding direction of the anode tab (126), and are alternately and repeatedly arranged along the protruding direction.

3. The anode (130) for a lithium secondary battery of claim 2, wherein the first portion (122) and the second portion (124) each has a uniform porosity along the protruding direction.

4. The anode (130) for a lithium secondary battery of claim 1, wherein the first portion (122) and the second portion (124) have the same thickness.

5. The anode (130) for a lithium secondary battery of claim 1, wherein Y/X of the anode active material layer (120) is in a range from 0.57 to 0.87, and
X is a maximum porosity obtained by an X-ray microscopy (XRM) measurement of the anode active material layer (120) and Y is a minimum porosity obtained by the XRM measurement of the anode active material layer (120).

6. The anode (130) for a lithium secondary battery of claim 1, wherein the first portion (122) has a higher porosity than that of the second portion (124), and
a distance between a point of a maximum porosity in the first portion (122) and a point of a minimum porosity in the second portion (124) is in a range from 0.3 mm to 2 mm.

7. A lithium secondary battery, comprising:
a cathode (100); and
the anode (130) for a lithium secondary battery of claim 1 facing the cathode.

8. A method of fabricating an anode (130) for a lithium secondary battery according to claim 1, comprising:
preparing a slurry coating apparatus (200) including a plurality of slits arranged in a grid shape;
discharging an anode slurry on a current collector using the slurry coating apparatus (200) to form a preliminary anode active material layer (220); and
pressing the preliminary anode active material layer (220) to form an anode active material layer (120) having a uniform thickness.

9. The method of claim 8, wherein the slurry coating apparatus (200) comprises discharging portions (211) defined as the slits, and a closed portion (212) defined between the discharging portions.

10. The method of claim 9, wherein each width (W, W') of the discharging portions (211) and the closed portion (212) is in a range from 300 µm to 2,000 µm.

11. The method of claim 8, wherein B/A is in a range from 0.64 to 0.93, and A is a maximum thickness of the preliminary anode active material layer (220), and B is a minimum thickness of the preliminary anode active material layer (220).

12. The method of claim 8, wherein the preliminary anode active material layer (220) has a wavy upper profile.

13. The method according to claim 8, wherein a minimum thickness of the preliminary anode active material layer (220) is greater than the thickness of the anode active material layer (120).

14. The method according to claim 8, wherein the preliminary anode active material layer (220) has a uniform porosity, and
pressing the preliminary anode active material layer (220) comprises forming a first portion (122) and a second portion (124) having different porosities from each other.

## Patentansprüche

1. Anode (130) für eine Lithium-Sekundärbatterie, umfassend:
einen Anodenstromkollektor (125); und
eine auf dem Anodenstromkollektor (125) ausgebildete Anodenaktivmaterialschicht (120), wobei die Anodenaktivmaterialschicht (120) einen ersten Abschnitt (122) und einen zweiten Abschnitt (124) umfasst, die unterschiedliche Porositäten aufweisen und wiederholt und abwechselnd angeordnet sind,
wobei die Porositäten mittels Röntgenmikroskopie (XRM) ermittelt werden,
wobei der Anodenstromkollektor (125) eine Anodenlasche (126) umfasst, die von einer Seite des Anodenstromkollektors (125) hervorsteht, und
der erste Abschnitt (122) und der zweite Abschnitt (124) abwechselnd und wiederholt entlang einer Vorstehrichtung der Anodenlasche (126) oder einer Richtung senkrecht zur Vorstehrichtung der Anodenlasche (126), definiert als Breitenrichtung einer Elektrode, angeordnet sind.

2. Anode (130) für eine Lithium-Sekundärbatterie nach Anspruch 1, wobei sich der erste Abschnitt (122) und der zweite Abschnitt (124) in der Richtung senkrecht zur Auskragungsrichtung der Anodenlasche (126) erstrecken und abwechselnd und wiederholt entlang der Vorstehrichtung angeordnet sind.

3. Anode (130) für eine Lithium-Sekundärbatterie nach Anspruch 2, wobei der erste Abschnitt (122) und der zweite Abschnitt (124) jeweils eine gleichmäßige Porosität entlang der Vorstehrichtung aufweisen.

4. Anode (130) für eine Lithium-Sekundärbatterie nach Anspruch 1, wobei der erste Abschnitt (122) und der zweite Abschnitt (124) die gleiche Dicke aufweisen.

5. Anode (130) für eine Lithium-Sekundärbatterie nach Anspruch 1, wobei Y/X der Anodenaktivmaterialschicht (120) in einem Bereich von 0,57 bis 0,87 liegt, und
X eine maximale Porosität ist, die durch eine Röntgenmikroskopie(XRM)-Messung der Anodenaktivmaterialschicht erhalten wird, und Y eine minimale Porosität ist, die durch die XRM-Messung der Anodenaktivmaterialschicht erhalten wird.

6. Die Anode (130) für eine Lithium-Sekundärbatterie nach Anspruch **1,** wobei der erste Abschnitt (122) eine höhere Porosität aufweist als der zweite Abschnitt (124) und
ein Abstand zwischen einem Punkt maximaler Porosität im ersten Abschnitt (122) und einem Punkt minimaler Porosität im zweiten Abschnitt (124) in einem Bereich von 0,3 mm bis 2 mm liegt.

7. Lithium-Sekundärbatterie, umfassend:
eine Kathode (100); und
die Anode (130) für eine Lithium-Sekundärbatterie nach Anspruch 1, die der Kathode zugewandt ist.

8. Verfahren zur Herstellung einer Anode (130) für eine Lithium-Sekundärbatterie nach Anspruch 1, umfassend:
Vorbereiten einer Aufschlämmungsbeschichtungsvorrichtung (200), die eine Vielzahl von Schlitzen enthält, die in einer Gitterform angeordnet sind;
Entladen einer Anodenaufschlämmung auf einen Stromabnehmer unter Verwendung der Auftragsvorrichtung (200), um eine vorläufige Anodenaktivmaterialschicht (220) zu bilden; und
Pressen der vorläufigen Anodenaktivmaterialschicht (220), um eine Anodenaktivmaterialschicht (120) mit einer gleichmäßigen Dicke zu bilden.

9. Verfahren nach Anspruch 8, wobei die Aufschlämmungsbeschichtungsvorrichtung (200) Entladungsabschnitte (211), die als Schlitze definiert sind, und einen geschlossenen Abschnitt (212), der zwischen den Entladungsabschnitten (211) definiert ist, umfasst.

10. Verfahren nach Anspruch 9, wobei jede Breite (W, W') der Entladungsabschnitte (211) und des geschlossenen Abschnitts (212) in einem Bereich von 300 µm bis 2.000 µm liegt.

11. Verfahren nach Anspruch 8, wobei B/A in einem Bereich von 0,64 bis 0,93 liegt, wobei A die maximale Dicke der vorläufigen Anodenaktivmaterialschicht (220) ist und B eine minimale Dicke der vorläufigen Anodenaktivmaterialschicht (220) ist.

12. Verfahren nach Anspruch 8, wobei die vorläufige Anodenaktivmaterialschicht (220) ein welliges oberes Profil aufweist.

13. Verfahren nach Anspruch 8, wobei eine minimale Dicke der vorläufigen Anodenaktivmaterialschicht (220) größer ist als die Dicke der Anodenaktivmaterialschicht (120).

14. Verfahren nach Anspruch 8, wobei die vorläufige Anodenaktivmaterialschicht (220) eine gleichmäßige Porosität aufweist, und
das Pressen der vorläufigen Anodenaktivmaterialschicht (220) das Bilden eines ersten Abschnitts (122) und eines zweiten Abschnitts (124) mit voneinander verschiedenen Porositäten umfasst.

## Revendications

1. Anode (130) pour une batterie secondaire au lithium, comprenant :
un collecteur de courant d'anode (125) ; et
une couche de matière active d'anode (120) formée sur le collecteur de courant d'anode (125), la couche de matière active d'anode (120) comprenant une première partie (122) et une deuxième partie (124) qui présentent des porosités différentes l'une de l'autre et sont disposées de manière répétée et alternée,
dans laquelle les porosités sont obtenues par microscopie à rayons X (XRM),
dans lequel le collecteur de courant d'anode (125) comprend une languette d'anode (126) faisant saillie d'un côté du collecteur de courant d'anode (125), et
la première partie (122) et la deuxième partie (124) sont disposées de manière alternée et répétée le long d'une direction de saillie de la languette d'anode (126) ou d'une direction perpendiculaire à la direction de saillie de la languette d'anode (126), définie comme une direction de largeur d'une électrode.

2. Anode (130) pour une batterie secondaire au lithium selon la revendication 1, dans laquelle la première partie (122) et la deuxième partie (124) s'étendent dans la direction perpendiculaire à la direction de saillie de la languette d'anode (126), et sont disposées en alternance et de manière répétée le long de la direction de saillie.

3. Anode (130) pour une batterie secondaire au lithium selon la revendication 2, dans laquelle la première partie (122) et la deuxième partie (124) présentent chacune une porosité uniforme le long de la direction de saillie.

4. Anode (130) pour une batterie secondaire au lithium selon la revendication 1, dans laquelle la première partie (122) et la deuxième partie (124) ont la même épaisseur.

5. Anode (130) pour une batterie secondaire au lithium selon la revendication 1, dans laquelle le rapport Y/X de la couche de matière active d'anode (120) est compris dans une plage allant de 0,57 à 0,87, et
X correspond à la porosité maximale obtenue par mesure par microscopie à rayons X (XRM) de la couche de matière active de l'anode (120) et Y correspond à la porosité minimale obtenue par mesure par XRM de la couche de matière active de l'anode (120).

6. Anode (130) pour une batterie secondaire au lithium selon la revendication 1, dans laquelle la première partie (122) présente une porosité supérieure à celle de la deuxième partie (124), et
la distance entre un point de porosité maximale dans la première partie (122) et un point de porosité minimale dans la deuxième partie (124) est comprise entre 0,3 mm et 2 mm.

7. Batterie secondaire au lithium, comprenant :
une cathode (100) ; et
l'anode (130) pour une batterie secondaire au lithium selon la revendication 1, faisant face à la cathode.

8. Procédé de fabrication d'une anode (130) pour une batterie secondaire au lithium selon la revendication 1, comprenant :
la préparation d'un appareil de revêtement par suspension (200) comprenant une pluralité de fentes disposées en forme de grille ;
le dépôt d'une suspension d'anode sur un collecteur de courant à l'aide de l'appareil d'enduction de suspension (200) afin de former une couche préliminaire de matière active d'anode (220) ; et
le pressage de la couche préliminaire de matériau actif d'anode (220) pour former une couche de matériau actif d'anode (120) ayant une épaisseur uniforme.

9. Procédé selon la revendication 8, dans lequel l'appareil de revêtement par suspension (200) comprend des parties de décharge (211) définies par les fentes, et une partie fermée (212) définie entre les parties de décharge.

10. Procédé selon la revendication 9, dans lequel chaque largeur (W, W') des parties de décharge (211) et de la partie fermée (212) est comprise dans une plage allant de 300 µm à 2 000 µm.

11. Procédé selon la revendication 8, dans lequel B/A est compris dans une plage allant de 0,64 à 0,93, et A est l'épaisseur maximale de la couche préliminaire de matière active d'anode (220), et B est l'épaisseur minimale de la couche préliminaire de matière active d'anode (220).

12. Procédé selon la revendication 8, dans lequel la couche préliminaire de matériau actif d'anode (220) présente un profil supérieur ondulé.

13. Procédé selon la revendication 8, dans lequel l'épaisseur minimale de la couche préliminaire de matériau actif d'anode (220) est supérieure à l'épaisseur de la couche de matériau actif d'anode (120).

14. Procédé selon la revendication 8, dans lequel la couche préliminaire de matériau actif d'anode (220) présente une porosité uniforme, et
le pressage de la couche préliminaire de matériau actif d'anode (220) comprend la formation d'une première partie (122) et d'une deuxième partie (124) présentant des porosités différentes l'une de l'autre.
